(19) Europäisches Patentamt
European Patent Office
Office européen des brevets

(11) **EP 4 001 335 A1**

(12) **EUROPÄISCHE PATENTANMELDUNG**

(43) Veröffentlichungstag:
    **25.05.2022   Patentblatt 2022/21**

(21) Anmeldenummer: **20208257.4**

(22) Anmeldetag: **18.11.2020**

(51) Internationale Patentklassifikation (IPC):
    **C08G 18/42** (2006.01)     **C08G 18/76** (2006.01)
    **C08L 75/06** (2006.01)     **B29C 44/00** (2006.01)
    **C08G 18/08** (2006.01)     **C08J 9/00** (2006.01)

(52) Gemeinsame Patentklassifikation (CPC):
    (C-Sets verfügbar)
    **C08G 18/7671; B29C 44/3442; C08G 18/0895;**
    **C08G 18/4211; C08K 3/32; C08L 75/06;**
    B29C 44/50; B29K 2075/00; C08G 2110/0025;
    C08G 2110/005; C08G 2110/0058;
    C08G 2110/0083; C08K 2003/323       (Forts.)

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**
    Benannte Validierungsstaaten:
    **KH MA MD TN**

(71) Anmelder: **Covestro Deutschland AG**
    **51373 Leverkusen (DE)**

(72) Erfinder:
    • **Paven, Maxime**
      **40764 Mainz (DE)**
    • **Albach, Rolf**
      **51061 Köln (DE)**

    • **Holtey, Thomas**
      **58300 Wetter (Ruhr) (DE)**
    • **Ehbing, Hubert**
      **51519 Odenthal (DE)**
    • **Franken, Klaus**
      **51467 Bergisch Gladbach (DE)**
    • **Koester, Sebastian**
      **50677 Köln (DE)**
    • **Baumgärtner, Felix**
      **70199 Stuttgart (DE)**

(74) Vertreter: **Levpat**
    **c/o Covestro AG**
    **Gebäude 4825**
    **51365 Leverkusen (DE)**

(54) **VERFAHREN ZUR HERSTELLUNG VON POLYURETHAN-SCHAUMSTOFFEN**

(57)   Die vorliegende Erfindung betrifft ein spezielles Verfahren zur Herstellung von PolyurethanSchaumstoffen, in dem die einzelnen Komponenten der Reaktionsmischung auf einem Extruder in Förderrichtung von der Einzugszone zur Austragszone in einer bestimmten Reihenfolge dosiert und auf dem Extruder vermischt werden und die Mischung anschließend ausgetragen wird. Die Erfindung betrifft ebenfalls die mit diesem Verfahren hergestellten Polyurethan-Schaumstoffe und ihre Verwendung.

EP 4 001 335 A1

(52) Gemeinsame Patentklassifikation (CPC): (Forts.)

C-Sets
**C08K 3/32;**
**C08L 75/06**

**Beschreibung**

Die vorliegende Erfindung betrifft ein spezielles Verfahren zur Herstellung von Polyurethan-Schaumstoffen, die mit diesem Verfahren hergestellten Polyurethan-Schaumstoffe und ihre Verwendung.

Polyurethane sind auf Grund ihrer vielseitigen Chemie und einstellbaren Eigenschaften in einer Vielzahl von Anwendungen zu finden, wie etwa als Polyurethan-Hartschäume für Dämmanwendungen. Polyurethan-Dämmstoffplatten zeichnen sich durch hervorragende Dämmeigenschaften bei geringer Dicke und Dichte der Platten aus, einer hohen Druckfestigkeit und einer guten Verarbeitbarkeit. Zur weiteren Verbesserung der Produkte hinsichtlich ihrer Flammwidrigkeit, Druckfestigkeit oder Dämmeigenschaften kann es zielführend sein das Polyurethan mit Feststoffen zu kombinieren. Ebenso werden im Rahmen der zunehmenden Zirkularität der Wertstoffströme neue, zum Teil hochviskose Polyurethanrohstoffe verfügbar, deren Einsatz zu nachhaltigeren Produkten führen kann.

Polyurethan-Schaumstoffe werden durch die Reaktion von mindestens einer isocyanatreaktiven Komponente mit einem Isocyanat erhalten. Die isocyanatreaktive Komponente und das Isocyanat werden in einer Mischkammer mit einander vermischt, üblicherweise erfolgt dies über das Verfahren der Gegenstrominjektion (Hochdruckmischer) oder durch ein Mischelement, wie z. B. einen Stachelrührer (Niederdruckmischer). Das aufschäumende Reaktionsgemisch wird anschließend auf einem Band abgelegt oder in eine Form gegeben, wo es ausreagiert.

Sowohl die Vermischung sehr viskoser Komponenten als auch das Vermischen der Komponenten mit Feststoffen oder feststoffhaltigen Pasten stellt für die gängigen Mischaggregate eine Herausforderung dar. Zuweilen können hohe Drücke notwendig sein, um die Komponenten zu verarbeiten und Mischaggregate können durch Ablagerungen zuwachsen. Auch das Vorvermischen eines Feststoffes in einer der reaktiven Komponenten kann auf Grund der Sedimentation des Feststoffes problematisch sein.

Es hat daher nicht an Versuchen gefehlt, die Vermischung und Reaktion der Komponenten mittels Reaktivextrusion herbeizuführen.

DE 2707026 erläutert ein Verfahren und eine Vorrichtung zur kontinuierlichen Extrusion von Kunststoffprofilen aus Polyurethan-Rohstoffen, Zusatzstoffen und gegebenenfalls Füllstoffen. Die Polyurethan-Rohstoffe werden aus Vorratsbehältern dosiert, in einem für die Polyurethanindustrie üblichen Mischkopf miteinander vermischt und die Mischung in einen Extruder eingebracht. Die Verweilzeit in dem Extruder wird so gewählt, dass es zu einer Viskositätserhöhung des Reaktionsgemisches zwischen dem Zeitpunkt des Eintrags und des Austrags aus dem Extruder kommt. Eine Feststoffzugabe kann während der Verweilzeit erfolgen. Da bei dieser Verfahrensweise eine Vorvermischung der Polyurethan-Rohstoffe über einen gewöhnlichen Mischkopf erfolgt, ist der Einsatz sehr viskoser Polyurethan-Rohstoffe nicht möglich. Ferner sind hohe Investitionskosten nötig, da sowohl ein Mischkopf als auch ein Extruder für dieses Verfahren nötig sind.

In der DE 10056251 wird ein Verfahren zur Herstellung von Polyurethan-Hartschaumstoffen beschrieben, bei dem die Ausgangsstoffe - Polyisocyanat und isocyanatreaktive Verbindung - ebenfalls zunächst vermischt und dann als Mischung in einen Extruder eingebracht werden. In dem Extruder wird durch die Schneckenbewegung bzw. durch die Polyurethanbildung Druck aufgebaut. Der Druck im Extruder ist höher als der Atmosphärendruck, wobei im Extruder die Polyurethanbildungsreaktion abläuft, und die Masse durch eine Austrittsöffnung, beispielsweise eine Düse oder ein Drosselventil, ausgetragen wird und zum Schaum aushärtet.

DE 4111458 offenbart eine Mischkammer mit einer Mischschnecke als Mischelement, wobei die Mischkammer und Mischschnecke konisch ausgeführt sind und die Mischschnecke mit einer Geschwindigkeit von 5000 bis 10000 U/min rotiert. Nachteil dieser Ausführung ist der komplexe Aufbau und ein notwendiger zusätzlicher Schritt zur Reinigung der Mischschnecke bei hohen Geschwindigkeiten im Bereich von 15000 bis 20000 U/min.

Werden die Reaktionspartner bereits zu einem frühen Zeitpunkt (insbesondere vor dem Eintritt in den Extruder bzw. die Mischschnecke) miteinander vermischt, kommt es bereits zu Reaktionen der beiden Komponenten miteinander und es bilden sich Ablagerungen im Bereich von Totzonen und Wandungen. Diese Ablagerungen wachsen mit der Zeit an und es ist notwendig diese zu entfernen, um eine Blockade der Mischkammer zu verhindern.

In der WO 96/20966 wird ein Verfahren zur Herstellung von Polyurethan-Schaumstoffen beschrieben, bei dem die Reaktionskomponenten in einem Extruder miteinander vermischt werden und nach ihrem Austrag auf einem Band, beispielsweise einem herkömmlichen Doppelband, aufschäumen und aushärten. Durch dieses Verfahren soll insbesondere das Einarbeiten von Füllstoffen in den Schaum erleichtert werden. Ein wesentliches Verfahrensmerkmal ist hier, dass der Katalysator erst nach der Vermischung der Reaktanden und kurz vor der Austrittsöffnung des Extruders zugegeben wird. Andernfalls startet die Reaktion zu früh und der Extruder droht zu verstopfen. Der Nachteil dieser zeitlich und örtlich späten Zugabe ist jedoch, dass es schwierig ist, die prozentual geringen Mengen des Katalysators genau zu dosieren und die Reaktionsmischung bis zum Austritt aus dem Extruder gründlich genug zu homogenisieren. So werden z.B. starke Druckschwankungen im Extruder beobachtet. Es wird ebenfalls darauf hingewiesen, dass die Polyurethanbildung zu Ablagerungen im Extruder führen kann und dass es unter Umständen zu einem Zuschäumen und der Blockade des Extruders kommen kann. Daher empfiehlt es sich Formulierungen mit sehr langer Abbindezeit zu verarbeiten. Lange Abbindezeiten senken aber die Produktivität des Verfahrens und können sich bei Polyisocyanuratschaumstoffen negativ auf die Schaumeigenschaften auswirken. So ist etwa bekannt, dass sich das Brandverhalten von Polyisocyanuratschaumstoffen mit zunehmender Abbindezeit der Reaktionsmasse verschlechtert. Als Extruder werden Ein- oder Zweiwellenextruder beschrieben, wobei es sich bei den Zweiwellenextrudern um gleichlaufende Schnecken handelt.

Ausgehend von den Verfahren aus dem Stand der Technik war es Aufgabe der vorliegenden Erfindung ein Verfahren zur Herstellung von Polyurethan-Schaumstoffen mittels Reaktivextrusion bereitzustellen, mit dem sich homogene Polyurethan-Reaktionsgemische, auch bei Verwendung von hochviskosen Ausgangsprodukten und/oder hohen Feststoffmengen, herstellen und austragen lassen. Das Verfahren soll sich außerdem durch einen geringen Aufwand für die Reinigung und die Instandhaltung auszeichnen, so dass längere Standzeiten erzielt werden können. Gleichzeitig sollte die Austragsmenge und Verweilzeit für großtechnische Prozesse geeignet sein.

Die obigen Aufgaben konnten überraschenderweise durch ein Verfahren gemäß Anspruch 1 gelöst werden. Weitere bevorzugte Ausführungsformen des Verfahrens sind in den Unteransprüchen wiedergegeben.

Erfindungsgemäß werden in dem Verfahren die Komponenten

A1) eine Polyolformulierung umfassend

> a1) mindestens eine isocyanatreaktive Komponente
> a2) optional Hilfs-und Zusatzstoffe
> a3) optional eine Katalysatorkomponente
> a4) optional ein chemisches und / oder ein physikalisches Treibmittel

A2) optional ein oder mehrere Feststoffe oder eine feststoffhaltige Paste

A3) optional ein (weiteres) physikalisches Treibmittel

B) eine Polyisocyanat - Komponente an folgenden Positionen eines Extruders in Förderrichtung von der Einzugszone zur Austragszone in der folgenden Reihenfolge dosiert:

- eine Teilmenge oder die gesamte Menge der Komponente A1) auf Position 1 oder 2,
- die Komponente A2) auf Position 2 oder 1,
- gegebenenfalls eine weitere Teilmenge der Komponente A1) auf Position 3,
- Komponente A3) auf Position 4,
- Komponente B) auf Position 5,

auf dem Extruder vermischt und anschließend als reaktive Mischung ausgetragen.

Als Extruder können die dem Fachmann bekannten Schneckenextruder zur Kunststoffverarbeitung eingesetzt werden. Insbesondere eignen sich Doppelschneckenextruder mit gleichläufig rotierenden Schneckenwellen oder gegenläufig rotierenden Schneckenwellen wie sie z. B. von der Fa. Werner & Pfleiderer, heute Coperion GmbH, erhältlich sind. Die Schneckenwellen des Extruders drehen sich mit mindestens 200 U/min, bevorzugt mehr als 1000 U/min, besonders bevorzugt von mehr als 5000 U/min. Der Durchmesser der einzelnen rotierenden Schneckenwellen beträgt 10 mm bis 80 mm, bevorzugt 20 mm bis 60 mm, besonders bevorzugt 30 mm bis 60 mm und die Länge der einzelnen rotierenden Schneckenwelle beträgt das 3- bis 20-fache, bevorzugt das 5- bis 15-fache, besonders bevorzugt 8- bis 12-fache des Durchmessers. Das Profil der Schneckenwellen kann ein- oder mehrgängig ausgeführt sein, kann also einen oder mehrere Schneckengänge aufweisen. Bevorzugt ist ein zweigängiges Profil. Die einhüllende Fläche der rotierenden Wellen ist vorzugsweise zylindrisch, kann aber auch konisch sein oder weitere Formen annehmen. In einer bevorzugten Ausführungsform werden die Gehäuse des Extruders auf eine Temperatur ≤ 55 °C temperiert.

Das Zuführen der reaktiven Komponenten in die Mischkammer des Extruders kann auf unterschiedliche Art und Weise erfolgen. Generell wird das zu vermischende Material über geeignete Öffnungen von außen in die Mischkammer eingebracht. Dies können z. B. Düsen, Injektionslanzen, Förderschnecken oder einfach nur Öffnungen sein.

Die Nummerierung der Positionen gibt die Reihenfolge der Einspeisung auf dem Extruder in Förderrichtung von der Einzugszone zur Austragszone wieder. Dies gilt auch für die Begriffe "vor", "nach" bzw. "letzter", die sich auf die Platzierung der Einspeisestellen in Förderrichtung beziehen. "Dosierung an Position 1" bedeutet also, dass die entsprechende Komponente vor den anderen Komponenten auf den Extruder gegeben wird. Dabei kann "Position 1" auch mehrere Einspeisestellen umfassen, die die Gemeinsamkeit besitzen, dass sie alle vor "Position 2" liegen.

Zu Position 1 können also mehrere unterschiedliche Einspeisestellen in Längs-(Förder-) und/oder Umfangsrichtung gehören, es sei denn, alle Komponententeile werden gemeinsam über eine Einspeisestelle zugeführt. Entsprechend können die anderen Positionen ebenfalls mehrere Einspeisestellen umfassen. Im Allgemeinen handelt es sich bei der Position 1 um den Einzug.

In dieser Patentanmeldung wird die Nummerierung der einzelnen Positionen beibehalten, auch wenn in einzelnen Ausführungsformen des Verfahrens an einer Position keine Einspeisung erfolgen sollte und diese Position deswegen unbelegt bleibt (z.B. wenn kein physikalisches Treibmittel an Position 3 eingespeist wird).

Dies bedeutet, dass in dem erfindungsgemäßen Verfahren zunächst die Polyolformulierung (Komponente A1) und/oder gegebenenfalls die Feststoffe bzw. die feststoffhaltige Paste (Komponente A2) dem Extruder zugeführt werden und eine Vermischung stattfindet. Die einzelnen Bestandteile der Polyolformulierung A1) können hierfür bereits vor der Einführung in die Mischkammer des Extruders zusammengeführt und als ein Stoffstrom in die Mischkammer gegeben werden. Es können aber auch alle Teilkomponenten von A1) einzeln zugeführt werden oder die Komponente A1) in mehreren Teilmengen zudosiert werden. In einer bevorzugten Ausführungsform wird zunächst die Komponente A1) ganz oder teilweise an Position 1 und dann der Feststoff bzw. die feststoffhaltige Paste A2) an Position 2 dem Extruder zugeführt. In einer weiteren bevorzugten Ausführungsform werden die gesamte Menge oder eine Teilmenge der Komponente A1) und die Komponente A2) an Position 1 zugeführt (in diesem Fall findet an Position 2 keine Einspeisung statt). Es kann vorteilhaft sein, weitere Teilmengen der Polyolformulierung A1), insbesondere Komponenten a2) ausgewählt aus der Gruppe enthaltend Hilfs- und Zusatzstoffe sowie Katalysatorkomponente a3), nach der Zugabe der Komponente A2) an Position 3 zuzuführen.

Optional kann (weiteres) physikalisches Treibmittel A3) vor Zugabe der Komponente B) und nach erfolgter vollständiger Zugabe der Komponenten A1) und A2) an Position 4 auf den Extruder eingeführt werden.

Erfindungsgemäß wird die Polyisocyanat - Komponente B) an letzter Position auf den Extruder dosiert, womit die Polyurethan-Reaktion gestartet wird. Auch die Komponente B kann inerten Feststoff enthalten. Diese späte Zugabe des Polyisocyanats hat den Vorteil, dass vor Reaktionsstart der Extruder aus den Komponenten A1) - A3) bereits ein homogenes Gemisch hergestellt hat. So lassen sich auch viskose Polyurethanrohstoffe und/oder große Mengen Feststoffe einsetzen und verarbeiten. Am Ende des Extruders steht ein homogenes Reaktionsgemisch dann zur weiteren Nutzung oder Verarbeitung bereit. Die Reaktionsmasse aus isocyanatreaktiver Komponente und der Polyisocyanat-Komponente entsteht somit erst unmittelbar vor dem Austreten aus dem Extruder und die Reaktionsmasse legt nur eine kurze Wegstrecke durch den Extruder bis zum Austritt zurück. Die Gefahr eines Abscheidens an Wandungen und eine Verstopfung des Extruders wird somit im Vergleich zu den Verfahren aus dem Stand der Technik deutlich verringert.

Als isocyanatreaktive Komponente a1) wird mindestens eine Verbindung ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Die isocyanatreaktive Komponente A1 kann bevorzugt eine Hydroxylzahl zwischen 25 bis 800 mg KOH/g, insbesondere 50 bis 500 mg KOH/g und besonders bevorzugt 100 bis 300 mg KOH/g aufweisen. Vorzugsweise weist die einzelne Polyolkomponente ein zahlenmittleres Molekulargewicht von 120 g/mol bis 6000 g/mol, insbesondere 400 g/mol bis 2000 g/mol und besonders bevorzugt 500 g/mol bis 1000 g/mol auf.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Die Polyesterpolyole der Komponente a1) können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Furandicarbonsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, hydroxylmodifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei- oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Es ist auch möglich, Polyester-, Polyetherester- und Polyetherpolyole über Glykolyse von geeigneten Polymer-Rezyklaten zu gewinnen.

Weiterhin können in der isocyanatreaktiven Komponente a1) niedermolekulare isocyanatreaktive Verbindungen enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol und Glycerin. Sofern zur Herstellung der Polyurethan-Schaumstoffe solche niedermolekularen isocyanatreaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente A1), zum Einsatz.

Neben den oben beschriebenen Polyolen und isocyanatreaktiven Verbindungen können in der Komponente a1) weitere isocyanatreaktive Verbindungen enthalten sein, beispielsweise Graft-Polyole, Polyamine, Polyaminoalkohole und Polythiole. Selbstverständlich umfassen die beschriebenen isocyanatreaktiven Komponenten auch solche Verbindungen mit gemischten Funktionalitäten.

Die Komponente a1) kann aus einer oder mehreren der oben genannten isocyanatreaktiven Komponenten bestehen.

Gegebenenfalls können Hilfs- und Zusatzstoffe als Komponente a2) eingesetzt werden. Beispiele für die Komponente a2) sind Katalysatoren, oberflächenaktive Substanzen, Schaumstabilisatoren, Zellregler, Feststoffe, Farbstoffe, Pigmente, Hydrolyseschutzmittel, fungistatische und bakteriostatisch wirkende Substanzen, flüssige oder in a1) lösliche oder dispergierbare Flammschutzmittel.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als in a1) lösliche oder dispergierbare Flammschutzmittel können verschiedene Phospholinoxide, Phosphinate, Phosphonate, Phosphazene, oder Phosphate verwendet werden, wie z. B. Tris(hydroxymethyl)phosphinoxid, Isobutyl-bis(hydroxymethyl)phosphinoxid, Isobutyl-bis(3-hydroxypropyl)phosphinoxid, 9,10-Dihydro-9-oxa-10-phosphorylphenanthrene-10-oxid-substituierte Propion-, Bernstein- und Methylbernsteinsäureester, wässrige Lösungen von Natriumphosphinat und Natriumdiethylphosphinat, Dimethylpropylphosphonat (DMPP) Diethylethylphosphonat (DEEP), Diethylhydroxymethylphosphonat, Dibutylhydroxymethylphosphonat, Diethanolaminomethylphosphonsäurediethylester, die Methyl- und Ethylester der P,P'-(4-morpholinylmethylene)bisphosphonsäure, Hexaphenoxycyclophosphazen, Trimethoxytriphenoxyphosphazen, Kresylphenoxyphosphazene, Triethylphosphat (TEP), Triarylphosphate wie Triphenylphosphat (TPP), Trikresylphosphat, Diphenylkresylphosphat (DPK), Bisphenol-A-bis(diphenylphosphat) (BDP), Resorcinyldiphosphat (RDP) und,tert-Butylphenyldiphenylphosphat eingesetzt werden. Weitere geeignete Flammschutzmittel sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Bevorzugt sind Triethylphosphat und seine Mischungen mit Triarylphosphaten sowie Hydroxymethylphosphonate. Es ist besonders bevorzugt, dass kein halogenhaltiges Flammschutzmittel eingesetzt wird.

Als Katalysator a3) zur Herstellung der Polyurethan-Schaumstoffe werden Verbindungen verwendet, welche die Reaktion der reaktiven Wasserstoffatome, insbesondere Hydroxylgruppen enthaltenden Verbindungen mit der Isocyanatkomponente B beschleunigen, wie z. B. tertiäre Amine oder Metallsalze. Die Katalysatorkomponenten können dem Reaktionsgemisch zudosiert oder auch ganz oder teilweise in der isocyanatreaktiven Komponente A1 vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z.B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

In einer bevorzugten Ausführungsform beträgt die Mischviskosität der Komponenten A1)+A2) $\geq$ 5 Pa*s, bevorzugt $\geq$ 10 Pa*s, gemessen mittels eines Rotationsviskosimeters (Platte-Platte Aufbau) bei 35 °C innerhalb eines Drehfrequenzbereichs von 0.1-100 rad/s. (Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Als Feststoffe A2), insbesondere verstärkend wirkende Feststoffe, sind die an sich bekannten, üblichen organischen und anorganischen Feststoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: Anorganische Feststoffe wie silikatische Mineralien, beispielsweise Schichtsilikate wie z. B. Antigorit, Serpentin, Hornblenden, Amphibole, Chrisotil, Montmorillonit und Talkum inclusive ihrer exfoliierten Varianten. Schichtdoppelhydroxide LDH, Metalloxide, wie Kaolin, Aluminiumoxide, Titanoxide und Eisenoxide. Metallsalze wie Kreide, Schwerspat und anorganische Pigmente wie Cadmiumsulfid und Zinksulfid. Glas u.a. sowie natürliche und synthetische faserförmige Mineralien wie Wollastonit, Metall- und insbesondere Glasfasern verschiedener Länge, die gegebenenfalls geschlichtet sein können. Bevorzugt sind anorganische Feststoffe aus der Gruppe der Gruppe der Silikate, der Metalloxide, der Metallhydroxide und der Borate, besonders bevorzugt Glimmer, Kaolin, Mica, Quarz, Sepiolith, Talkum, Wollastonit, Magnesium- und Aluminiumhydroxid, Hämatit und Magnetit, Eisenhydroxide und Zinkborat. Als organische Feststoffe kommen beispielsweise in Betracht: Kohle, Graphit, Graphen, Graphenoxid, Melamin und seine Salze wie Melamincyanurat, Melamindiphenylphosphinat, Melamindiethylphosphinat, die Aluminium- und Zinksalze der Diethylhypophosphorigen Säure, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern. Auch oligomere Phosphonate wie sie von FRX Polymers unter dem handelsnamen Nofia® angeboten werden, können geeignete Füllstoffe sein. Insbesonders können auch Rezyklate eingesetzt werden, z.B. Rezyklate von organischen Polymerverbindungen.

Insbesondere bevorzugt werden Feststoffe mit flammhemmender Wirkung (feste Flammschutzmittel), z.B. Ammoniumphosphat und -polyphosphat, Aluminium- und Magnesiumhydroxid, verschiedene Metallcarbonate, Metallborate und Stannate, Borverbindugen, Blähgraphit/expandierbarer Graphit, Aluminium- und Ammoniumsulfat, Roter Phosphor, Antimontrioxid, Antimonpentoxid, Melaminverbindungen. Die Feststoffe können beschichtet sein, um die Wechselwirkung mit der Matrix zu optimieren.

Bevorzugt wird zur Dosierung der Feststoffe A2) eine Seitenfütterung mit Ein- oder Mehrfachschnecke verwendet.

Bei feststoffhaltigen Pasten handelt es sich um hochgefüllte Dispersionen der oben genannten Feststoffe in reaktiven oder nichtreaktiven Flüssigkeiten, ggf. auch Isocyanaten, die z. B. durch Compoundierung hergestellt werden können.

Der Polyolformulierung kann ein chemisches und/oder physikalisches Treibmittel a4) zugesetzt werden. Alternativ oder zusätzlich kann (weiteres) physikalisches Treibmittel A3) vor Zugabe der Komponente B) und nach erfolgter vollständiger Zugabe der Komponenten A1) und A2) an Position 4 auf den Extruder eingeführt werden.

Bevorzugte physikalische Treibmittel, die als Komponente a4) und/oder A3) eingesetzt werden, sind niedrig siedende organische Verbindungen, Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente B inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Bei den bevorzugt eingesetzten chemischen Treibmitteln handelt es sich um Wasser, Carbonsäuren und deren Gemische. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Malonsäure, Oxalsäure und Ricinolsäure, eingesetzt. Auch Ammoniumsalze der Dialkylcarbaminsäure, die mit Isocyanat zu Dialkylharnstoffen und $CO_2$ reagieren, können geeignet eingesetzt werden. Als chemisches Treibmittel wird besonders bevorzugt Wasser eingesetzt.

Vorzugsweise werden keine halogenierten Kohlenwasserstoffe als Treibmittel verwendet.

Als geeignete Isocyanatkomponente B kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente B ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente B eingesetzt werden. Die Präpolymere sind herstellbar durch Umsetzung eines oder mehrerer Polyisocyanate mit einem oder mehreren Polyolen, entsprechend den unter den isocyanatreaktiven Komponenten A1 beschriebenen Polyolen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an isocyanatreaktiven Gruppen, multipliziert mit 100, verstanden:

$$\text{Kennzahl} = (\text{Mole Isocyanat-Gruppen} / \text{Mole isocyanatreaktive Gruppen}) * 100$$

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 90 bis 600 führen, bevorzugt zwischen 250 und 450. Diese Kennzahl liegt bevorzugt in einem Bereich von 300 bis 400 in dem ein hoher Anteil an Polyisocyanuraten (PIR) vorliegt (der Polyurethan-Schaumstoff wird als PIR-Schaumstoff oder PUR-/PIR-Schaumstoff bezeichnet) und zu einer höheren Flammwidrigkeit des Polyurethan-Schaumstoffes selbst führt. Ein anderer bevorzugter Bereich für die Isocyanat-Kennzahl ist der Wertebereich von >90 bis <150 in dem der Polyurethan-Schaumstoff zum Beispiel zu geringerer Sprödigkeit neigt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25 °C.

Die mit dem Extruder herstellbaren, besonders homogenen Polyurethan-Schaumstoffe zeichnen sich durch eine Rohdichte im Bereich von 20 und 300 kg/m$^3$, insbesondere 30 bis 150 kg/m$^3$. Sie finden beispielsweise in der Herstellung von Isoliermaterial, Möbelpolsterungen, Textileinlagen, Matratzen, Automobilsitze, Kopfstützen, Armlehnen, Schwämme und Bauelemente, sowie Sitz- und Armaturenverkleidungen Verwendung.

In einer bevorzugten Ausführungsform handelt es sich um Hartschaumstoffe. Sie besitzen aufgrund ihrer Homogenität gute mechanische Eigenschaften und sind insbesondere flammwidrig ausgerüstet. In einer bevorzugten Ausführungsform enthalten sie 15-70 Gew.-%, insbesondere 40-60 Gew.-% Feststoffanteil, gerechnet auf die Masse des Schaumstoffs. Die Schaumstoffe weisen nach einer Veraschung bei 750 °C für 30 Minuten bevorzugt einen Massenverlust von ≤ 50 Gew.-% auf.

**Die Erfindung soll anhand der folgenden Beispiele näher beschrieben werden:**

Als Basispolyurethanformulierung diente das Hartschaumsystem aus Beispiel 1, dem in den Beispielen 2-9 unterschiedliche Mengen der Feststoff-Komponente A2) zugefügt wurde (siehe Tabelle 1).

Einsatzstoffe:

Komponente A1)

a1-i): Desmophen 4070X (Phthalsäure basierter Polyester, die Hydroxylzahl beträgt 370 mg KOH/g, bestimmt entsprechend DIN 53240-1 (Juni 2013), Covestro AG)
a2-i): Tegostab B8565 (Evonik Industries AG)

a3-i) Dabco Crystalline (Evonik Industries AG)
a3-ii) Jeffcat ZF-10 (Huntsman Corporation)
a4-i) Wasser

Komponente A2)

A2-i) AP422 (Ammoniumpolyphosphat, Clariant AG)

Komponente B)

B-i) Isocyanat Desmodur 44V70L (4-4'-Diphenylmethandiisocyanat, NCO-Gehalt ~31 Gew.-%, Covestro AG)
Der Index (100 NCO/OH) betrug in allen Beispiele 100.
Polyurethanhartschaumstoffe mit unterschiedlichen Anteilen A2-i) wurden im Folgenden mittels eines Reaktivextruders hergestellt (Tabelle 1). Die Angabe Gew.-T. entspricht den Gewichtsteilen bezogen auf 100 Teile A1 Komponente und die Angabe Gew.-% bezieht sich auf die prozentuale Masse der Einzelkomponenten auf die Gesamtmasse des Polyurethanschaums.
Die Beispiele 1-9 wurden unter Verwendung eines Doppelschneckenextruders (ZSK 25, Werner & Pfleiderer) mit einem Schneckendurchmesser von 25 mm und einem L/D Verhältnis von 42 hergestellt. Die Komponenten A1), A2-i) und B) wurden getrennt voneinander vorgehalten. A1) wurde durch eine Dosieranlage an Position 1 und B) durch eine Dosieranlage an Position 3 zugeführt. A2-i) wurde über eine Seiteneinspeisung mit Förderschnecke auf Position 2 eingebracht. Die Drehzahl des Extruders wurde von 200-500 U/min variiert und die Austragsleistung des Extruders betrug 10-25 kg/h. Der Extruder wurde auf 35 °C, die Vorratsbehälter für A1) und B) wurden jeweils auf 45 °C temperiert. Am Auslass des Extruders befand sich eine Drosselklappe und die austretende Masse wurde in Schalen aufgefangen. Das Polyurethangemisch schäumte in den Schalen frei auf und reagierte über Nacht aus bevor der Zuschnitt der Prüfkörper erfolgte.

Eigenschaften und Messmethoden:

Die dynamischen Viskosität der Komponente A1) und Mischungen von A1) mit A2-i) wurde mit einem Platte-Platte Rheometer ermittelt. Die Messungen fanden bei 35 °C in einem Bereich von 0.1 bis 100 rad/s nach DIN 53019-1 statt (September 2008) (Plattendurchmesser = 25 mm, DHR2 TA Instruments).
Die Rohdichte und Offenzelligkeit der ausgehärteten Schäume wurde nach DIN EN ISO 845 (Oktober 2009) bzw. mit einem Accupyk-1330 nach DIN EN ISO 4590 (August 2003) bestimmt.
Die Druckspannung bei 10% Stauchung wurde mit einer Startlast von 10 N nach DIN EN 826 (Mai 2013) an 50x50x50 mm$^3$ großen Prüfkörpern ermittelt.
Der mittlere Zelldurchmesser wurde manuell aus rasterelektronenmikroskopischen Aufnahmen ausgewertet.
Die Messung der Wärmeleitzahl erfolgte nach DIN 52616 (November 1977).
Die Entflammbarkeit der Prüfkörper wurde entsprechend UL 94 V getestet (Underwriter Laboratories Inc. Northbrook, Illinois, vertikale Prüfung) und die Bestimmung der Wärmefreisetzung erfolgte gemäß ISO 5660-1 (März 2015) mit dem "Cone Calorimeter".

Tabelle 1 Polyurethanformulierungen der Beispiele 1-9

| Beispiel | | 1 | 2 | 3 | 4 | 5 | 6 | 7 | 8 | 9 |
|---|---|---|---|---|---|---|---|---|---|---|
| Komponente A1) | | | | | | | | | | |
| a1-i) | Gew.-T. | 95.0 | 95.0 | 95.0 | 95.0 | 95.0 | 95.0 | 95.0 | 95.0 | 95.0 |
| a2-i) | Gew.-T. | 0.5 | 0.5 | 0.5 | 0.5 | 0.5 | 0.5 | 0.5 | 0.5 | 0.5 |
| a4-i) | Gew.-T. | 4.0 | 4.0 | 4.0 | 4.0 | 4.0 | 4.0 | 4.0 | 4.0 | 4.0 |
| a3-i) | Gew.-T. | 0.3 | 0.3 | 0.3 | 0.3 | 0.3 | 0.3 | 0.3 | 0.3 | 0.3 |
| a3-ii) | Gew.-T. | 0.2 | 0.2 | 0.2 | 0.2 | 0.2 | 0.2 | 0.2 | 0.2 | 0.2 |
| Komponente A2) | | | | | | | | | | |
| A2-i) | Gew.-T. | 0.0 | 45.0 | 73.8 | 90.0 | 147.6 | 175.0 | 200.0 | 221.4 | 250.0 |
| A2-i) | Gew.-% auf Schaum | 0.0 | 15.5 | 23.1 | 26.8 | 37.5 | 41.6 | 44.8 | 47.4 | 50.4 |

(fortgesetzt)

| Komponente B) | | | | | | | | | | |
|---|---|---|---|---|---|---|---|---|---|---|
| B-i) | Gew.-T. | 145.9 | 145.9 | 145.9 | 145.9 | 145.9 | 145.9 | 145.9 | 145.9 | 145.9 |
| Index (100 NCO/OH) | | 100 | 100 | 100 | 100 | 100 | 100 | 100 | 100 | 100 |

Vor der Durchführung der Extrusionsversuche wurde die Kinetik der Reaktionsmischung anhand von Beispiel 1 (kein A2-i)) untersucht (Tabelle 2). Die Komponenten wurden bei 30 bzw. 40 °C temperiert, um ihre Fließfähigkeit zu erhöhen. Die Komponente A1) wurde bei 1200 U/min für 10 Sekunden mit einem Pendraulikrührer homogenisiert. Anschließend wurde die Komponente B) hinzugefügt und beide für 25 bzw. 15 Sekunden bei 4200 U/min miteinander vermischt. Die Kinetiken, gemessen ab Beginn des Mischvorgangs der beiden Komponenten, sind in Tabelle 2 zu finden. Als Startzeit wird der Zeitpunkt angegeben, bei dem mit geschultem Auge ein Beginn des Schäumvorgangs beobachtet wird. Die Abbindezeit entspricht dem Zeitpunkt, ab dem ein in das aufschäumende Reaktionsgemisch eingetauchter Holzstab beim Herausziehen Fäden aus Polymer mitzieht.

Tabelle 2: Kinetik der Polyurethanformulierung aus Beispiel 1 (Vermischung mit Pendraulikrührer)

| Temperatur Komponente A1) | 30 | 40 | °C |
|---|---|---|---|
| Temperatur Komponente B) | 30 | 40 | °C |
| Mischzeit Komponente A1)+B) (Rührerdrehzahl 4200 U/min) | 25 | 15 | Sekunden |
| Startzeit | 45 | 40 | Sekunden |
| Abbindezeit | 80 | 65 | Sekunden |
| Steigzeit | 105 | 90 | Sekunden |
| Freie Kernrohdichte | 42 | 46 | kg/m$^3$ |

Die dynamischen Viskositäten der Komponente A1) (Beispiel 1, ohne AP422) und der unterschiedlichen Mischungen aus A1) und A2-i) (Beispiele 2-3 und 5-9, mit AP422) wurden bestimmt und sind in Tabelle 3 zu finden. Es wurde beobachtet, dass die Viskosität von A1) durch die Zugabe von A2-i) stark anstieg, was bei der Gegenüberstellung von Beispiel 1 (kein AP422, 19 Pa·s bei 35 °C und 0.1 rad/s) und Beispiel 9 (250 Gew.-T AP422, 40550 Pa·s bei 35 °C und 0.1 rad/s) besonders deutlich wird. Beispiel 1 konnte mit Hilfe eines üblichen Pendraulikrührers vermischt und verschäumt werden. Die Beispiele die die Komponente A2-i) enthalten konnten auf Grund der hohen dynamischen Viskositäten nicht mehr mit einem Pendraulikrührer vermischt werden und wurden mit dem Extruder verarbeitet. Um den Einfluss der Extruderdrehzahl und der Durchsatzmenge des Extruders auf die Schaumqualität zu untersuchen wurde die Polyurethanformulierung aus Beispiel 1 verwendet (Tabelle 4).

Tabelle 3: Dynamische Viskosität der Komponenten A) ohne und mit AP422 bei 35 °C

| Beispiel | 1 | 2 | 3 | 4 | 5 | 6 | 7 | 8 | 9 |
|---|---|---|---|---|---|---|---|---|---|
| Gew.-T. A2-i) auf 100 Gew. T. A1) | 0.0 | 45.0 | 73.8 | 90.0 | 147.6 | 175.0 | 200.0 | 221.4 | 250.0 |
| Gew.-% A2-i) im Schaum | 0.0 | 15.5 | 23.1 | 26.8 | 37.5 | 41.6 | 44.8 | 47.4 | 50.4 |
| Drehfrequenz | Viskosität | | | | | | | | |
| rad/s | Pa·s | | | | | | | | |
| 0.1 | 19 | 100 | 165 | - | 2128 | 4911 | 9030 | 27083 | 40550 |
| 0.2 | 18 | 96 | 155 | - | 1473 | 3198 | 5563 | 15017 | 23349 |
| 0.3 | 18 | 94 | 149 | - | 1098 | 2149 | 3549 | 8831 | 13854 |
| 0.4 | 17 | 91 | 144 | - | 852 | 1507 | 2365 | 5474 | 8552 |
| 0.6 | 17 | 90 | 140 | - | 709 | 1145 | 1709 | 3630 | 5569 |
| 1.0 | 16 | 88 | 138 | - | 603 | 902 | 1288 | 2509 | 3751 |

(fortgesetzt)

| Beispiel | 1 | 2 | 3 | 4 | 5 | 6 | 7 | 8 | 9 |
|---|---|---|---|---|---|---|---|---|---|
| 1.6 | 16 | 86 | 135 | - | 528 | 741 | 1019 | 1823 | 2638 |
| 2.5 | 15 | 85 | 133 | - | 469 | 624 | 833 | 1376 | 1926 |
| 4.0 | 15 | 83 | 129 | - | 421 | 535 | 700 | 1077 | 1458 |
| 6.3 | 15 | 80 | 125 | - | 380 | 468 | 604 | 871 | 1142 |
| 10.0 | 15 | 76 | 119 | - | 345 | 417 | 534 | 731 | 926 |
| 15.8 | 15 | 72 | 112 | - | 318 | 380 | 485 | 639 | 780 |
| 25.1 | 15 | 67 | 104 | - | 299 | 353 | 452 | 581 | 685 |
| 39.8 | 15 | 63 | 97 | - | 285 | 336 | 430 | 545 | 626 |
| 63.1 | 15 | 59 | 92 | - | 277 | 324 | 415 | 524 | 591 |
| 100.0 | 15 | 56 | 89 | - | 271 | 316 | 405 | 510 | 570 |

Tabelle 4: Variation der Extruderdrehzahl und der Durchsatzmenge des Extruders für Beispiel 1

| Extruderdurchsatz | kg/h | 25 | | | 40 | | |
|---|---|---|---|---|---|---|---|
| Extruderdrehzahl | U/min | 200 | 300 | 500 | 200 | 300 | 500 |
| Mittlerer Zelldurchmesser | $\mu$m | 352 | 282 | 244 | 394 | 328 | 266 |
| Druckspannung bei 10% (quer zur Aufschäumrichtung) | kPa | 129 | 137 | 113 | 116 | 109 | 128 |
| Rohdichte | kg/m$^3$ | 48.2 | 47.0 | 48.3 | 46.3 | 45.6 | 44.7 |

Es konnte gezeigt werden, dass ein schneller drehender Extruder (500 U/min gegenüber 200 U/min) vorteilhaft ist, da sich der mittlere Zellendurchmesser verkleinert. Gleiches konnte beobachtet werden, wenn der Durchsatz des Extruders von 40 kg/h auf 25 kg/h herabgesetzt wurde. Die höchste Druckfestigkeit der Schäume wurde bei einem Durchsatz von 25 kg/h und einer Drehzahl von 300 U/min beobachtet. Für die Herstellung der Beispiele 1-9 auf dem Extruder wurde daher eine Extruderdrehzahl von 500 U/min und eine Durchsatzmenge von 25 kg/h und weniger gewählt, die Durchsatzmenge des Extruders (A1)- und B)-Komponente) und die Dosierungsleistung der Seiteneinspeisung von A2-i) wurden entsprechend Tabelle 5 kontrolliert.

Tabelle 5: Einstellung des Extruders und der Seiteneinspeisung zur Herstellung der Beispiele 1-9

| Beispiel | Gew.-T. A2-i) auf 100 Gew.-T. A1) | Gew.-% A2-i) im Schaum | Durchsatz an A2-i) über die Seiteneinspeisung | Durchsatz an A1)+B) durch den Extruder |
|---|---|---|---|---|
| | | % | kg/h | kg/h |
| 1 | 0.0 | 0.0 | 0.0 | 25.0 |
| 2 | 45.0 | 15.5 | 3.8 | 21.7 |
| 3 | 73.8 | 23.1 | 6.3 | 21.7 |
| 4 | 90.0 | 26.8 | 7.5 | 21.7 |
| 5 | 147.6 | 37.5 | 6.0 | 10.0 |
| 6 | 175.0 | 41.6 | 7.0 | 10.0 |
| 7 | 200.0 | 44.8 | 8.0 | 10.0 |
| 8 | 221.4 | 47.4 | 9.0 | 10.0 |
| 9 | 250.0 | 50.4 | 10.0 | 10.0 |

Die Schäume wurden nach dem sie über Nacht ausreagiert waren untersucht. Tabelle 6 fasst die Rohdichte, die Offenzelligkeit, die Druckspannung, den Zelldurchmesser, die Wärmeleitzahl und die brandtechnologische Prüfung der verschiedenen Beispiele zusammen.

Die Rohdichte der Hartschäume stieg mit steigender Menge AP422, gleichzeitig erhöhte sich die Offenzelligkeit und die Druckspannung nahm ab. Der mittlere Zelldurchmesser nahm mit steigender AP422 Konzentration ab. Das legt nahe, dass die Zahl der Nukleationszentren pro Volumeneinheit durch die Zugabe des Feststoffes zunahm.

Die Entflammbarkeit entsprechend UL 94 nahm durch die Zugabe von AP422 ab und ab einer Zugabe von bereits 45 Gew.-T. AP422 (Beispiel 2) erreichten alle Beispiele die Einstufung V-0.

Bei der Prüfung nach ISO 5660-1, dem Cone Calorimeter, konnte gezeigt werden, dass ein hoher AP422 Anteil vorteilhaft ist. So verringert sich z. B. das Maximum der gemittelten Wärmefreisetzungsrate (Maximum average rate of heat emission MARHE) von 238 kW/m$^2$ (kein AP422) auf bis zu 93 kW/m$^2$ (250 Gew.T. AP422). Gleichzeitig nahm der Brandrückstand von 8 auf 52 Gewichtsprozent zu, was als Zeichen einer effizienten Verkohlung der Beispiele mit hoher AP422 Menge zu sehen ist.

Außerdem wurde gefunden, dass es für die Dosierung des Feststoffes vorteilhaft ist eine Seiteneinspeisung mit Förderschnecke einzusetzen. Bei Vergleichsbeispielen ohne Förderschnecke, d.h. wenn man den Feststoff nur durch die Gravitationskraft in die Extruderöffnung einrieseln lässt, kam es bei 190 Gew.-T. AP422 zu einer verminderten Dosierleistung des AP422, da sich die Zylinderöffnung der Seiteneinspeisung mit dem Feststoff zusetzte.

Tabelle 6: Materialeigenschaften der Beispiele 1-9, die mit einem Extruder hergestellt wurden

| Beispiel | | 1 | 2 | 3 | 4 | 5 | 6 | 7 | 8 | 9 |
|---|---|---|---|---|---|---|---|---|---|---|
| Gew.-T. A2-i) auf 100 Gew.-T A1) | | 0.0 | 45.0 | 73.8 | 90.0 | 147.6 | 175.0 | 200.0 | 221.4 | 250.0 |
| Gew.-% A2-i) auf Schaum | | 0.0 | 15.5 | 23.1 | 26.8 | 37.5 | 41.6 | 44.8 | 47.4 | 50.4 |
| **Materialeigenschaften** | | | | | | | | | | |
| Rohdichte | kg/m$^3$ | 42 | 62 | 62 | 102 | 99 | 94 | 100 | 102 | 105 |
| Offenzelligkeit | % | - | - | 8 | - | 6 | - | - | 12 | - |
| Druckspannung bei 10% (Parallel zur Aufschäumrichtung) | kPa | 319 | 345 | 339 | 293 | 214 | 169 | 158 | 138 | 119 |
| Mittlerer Zelldurchmesser | μm | 165 | 142 | - | 138 | 128 | 115 | 132 | 136 | 113 |
| Wärmeleitzahl λ DIN 52616 | mW/mK | - | - | 28.2 | - | 39.2 | - | - | 34.6 | - |
| **Brandtechnologische Prüfungen** | | | | | | | | | | |
| UL 94 V | Einstufung | n.b.* | V-0 | - | V-0 | V-0 | V-0 | V-0 | V-0 | V-0 |
| Cone Calorimeter ISO 5600-1 | | | | | | | | | | |
| MARHE | kW/m$^2$ | 238 | - | 137 | - | 83 | - | - | 93 | - |
| PHRR | kW/m$^2$ | 296 | - | 165 | - | 111 | - | - | 122 | - |
| THR | MJ/m$^2$ | 30 | - | 28 | - | 35 | - | - | 39 | - |
| TSP | m$^2$/m$^2$ | 13 | - | 10 | - | 9 | - | - | 8 | - |
| Rückstand | Gew.-% | 8 | - | 31 | - | 49 | - | - | 52 | - |

*n.b.: nicht bestanden, der Prüfkörper ist abgebrannt

**Patentansprüche**

1. Verfahren zur Herstellung von Polyurethan-Schaumstoffen durch Vermischung der Komponenten

   A1) eine Polyolformulierung umfassend

   a1) mindestens eine isocyanatreaktive Komponente
   a2) optional Hilfs-und Zusatzstoffe
   a3) optional eine Katalysatorkomponente
   a4) optional ein chemisches und/oder ein physikalisches Treibmittel
   A2) optional ein oder mehrere Feststoffe oder eine feststoffhaltige Paste
   A3) optional ein physikalisches Treibmittel
   B) eine Polyisocyanat - Komponente

   in einem Extruder, **dadurch gekennzeichnet, dass** die Komponenten auf dem Extruder in Förderrichtung von der Einzugszone zur Austragszone in der folgenden Reihenfolge dosiert werden:

   - eine Teilmenge oder die gesamte Menge der Komponente A1) auf Position 1 oder 2,
   - die Komponente A2) auf Position 2 oder 1,
   - gegebenenfalls eine weitere Teilmenge der Komponente A1) auf Position 3,
   - Komponente A3) auf Position 4,
   - Komponente B) auf Position 5,

   anschließend auf dem Extruder vermischt werden,
   und die Mischung anschließend ausgetragen wird.

2. Verfahren gemäß Anspruch 1, **dadurch gekennzeichnet, dass** weitere Komponenten ausgewählt aus der Gruppe enthaltend Hilfs- und Zusatzstoffe sowie Katalysatorkomponenten hinter der Position 1 und vor der Position 3 dosiert werden.

3. Verfahren gemäß Anspruch 1 oder 2, **dadurch gekennzeichnet, dass** der Extruder ein Doppelschneckenextruder mit gleichläufig rotierenden Schneckenwellen ist.

4. Verfahren gemäß Anspruch 1 oder 2, **dadurch gekennzeichnet, dass** der Extruder ein Doppelschneckenextruder mit gegenläufig rotierenden Schneckenwellen ist.

5. Verfahren gemäß einem der Ansprüche 1 - 4, **dadurch gekennzeichnet, dass** die Temperierung der Gehäuse des Extruders auf eine Temperatur ≤ 55 °C eingestellt wird.

6. Verfahren gemäß Anspruch 1-5, **dadurch gekennzeichnet, dass** die Komponente a1) mindestens ein Polyol ausgewählt aus der Gruppe bestehend aus Polyetherpolyolen, Polyesterpolyolen, Polyetheresterpolyolen, Polycarbonatpolyolen und Polyether-Polycarbonatpolyolen enthält.

7. Verfahren gemäß Anspruch 6, **dadurch gekennzeichnet, dass** das Polyol eine Hydroxylzahl zwischen 25 bis 800 mg KOH/g, insbesondere 50 bis 500 mg KOH/g und besonders bevorzugt 100 bis 300 mg KOH/g aufweist.

8. Verfahren gemäß Anspruch 1-7, **dadurch gekennzeichnet, dass** die Komponente A2) ein oder mehrere feste Flammschutzmittel enthält.

9. Verfahren gemäß Anspruche 1-8, **dadurch gekennzeichnet, dass** die Komponente A2) ein organisches oder anorganisches Rezyklat enthält.

10. Verfahren gemäß einem der vorangehenden Ansprüche, **dadurch gekennzeichnet, dass** der Gewichtsanteil der Komponente A2) an der gesamten Mischung 15 - 70 Gew.-%, insbesondere 40 - 60 Gew.-%, beträgt.

11. Verfahren gemäß einem der Ansprüche 1-10, **dadurch gekennzeichnet, dass** die Mischviskosität der Komponente A1)+A2) > 5 Pa*s, bevorzugt > 10 Pa*s beträgt gemessen mittels eines Rotationsviskosimeters (Platte-Platte Aufbau) bei 35 °C innerhalb eines Drehfrequenzbereichs von 0.1-100 rad/s.

12. Verfahren gemäß einem der vorangehenden Ansprüche, **dadurch gekennzeichnet, dass** die Schneckenwellen des Extruders mit mindestens 200 U/min, bevorzugt mehr als 1000 U/min, besonders bevorzugt von mehr als 5000 U/min drehen.

13. Polyurethan-Schaumstoff erhältlich nach einem Verfahren gemäß einem der Ansprüche 1-12.

14. Polyurethan-Schaumstoff erhältlich nach einem Verfahren gemäß einem der Ansprüche 1-12, der nach einer Veraschung bei 750 °C für 30 Minuten einen Massenverlust von ≤ 50 Gew.-% aufweist.

15. Verwendung eines Polyurethan-Schaumstoffes gemäß Anspruch 13 oder 14 für die Herstellung von Isoliermaterial, Möbelpolsterungen, Textileinlagen, Matratzen, Automobilsitze, Kopfstützen, Armlehnen, Schwämme und Bauelemente, sowie Sitz- und Armaturenverkleidungen.

Europäisches
Patentamt

European
Patent Office

Office européen
des brevets

# EUROPÄISCHER RECHERCHENBERICHT

Nummer der Anmeldung

EP 20 20 8257

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/072188 A2 (CENTURY BOARD USA LLC [US]; BROWN WADE H [US]) 11. August 2005 (2005-08-11) * Seite 14, Zeilen 3-5; Beispiel 1 * ----- | 1-15 | INV. C08G18/42 C08G18/76 C08L75/06 B29C44/00 |
| X | WO 2007/112105 A2 (CENTURY BOARD USA LLC [US]; BROWN WADE H [US]) 4. Oktober 2007 (2007-10-04) * Absätze [0036], [0144]; Abbildung 4 * ----- | 1-15 | C08G18/08 C08J9/00 |
| X | US 2012/029145 A1 (BROWN WADE H [US]) 2. Februar 2012 (2012-02-02) * Absätze [0108], [0268]; Abbildung 4 * ----- | 1-15 | |
| X | US 2005/234213 A1 (SALSMAN KEITH [US] ET AL) 20. Oktober 2005 (2005-10-20) * Absätze [0124] - [0131] * ----- | 1-15 | |
| X | WO 2007/044017 A1 (DONEY GRANT W [US]; SALSMAN KEITH [US]) 19. April 2007 (2007-04-19) * Seite 34, Zeile 14 - Seite 36, Zeile 17 * ----- | 1-15 | |
| X | WO 01/90243 A1 (DONEY GRANT [CA]) 29. November 2001 (2001-11-29) * Seite 12 - Seite 13 * ----- | 1-15 | RECHERCHIERTE SACHGEBIETE (IPC) C08K C08G C08L B29C C08J |
| X | WO 2008/128589 A1 (PFLEIDERER HOLZWERKSTOFFE [DE]; VON WERDER HANS-KURT [DE] ET AL.) 30. Oktober 2008 (2008-10-30) * Beispiel 1 * ----- | 1-15 | |
| X,D | WO 96/20966 A1 (APACHE PROD CO [US]) 11. Juli 1996 (1996-07-11) * Anspruch 1 * ----- | 13-15 | |

Der vorliegende Recherchenbericht wurde für alle Patentansprüche erstellt

| Recherchenort | Abschlußdatum der Recherche | Prüfer |
|---|---|---|
| München | 9. April 2021 | Lanz, Sandra |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                     EP 20 20 8257

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2021

| Im Recherchenbericht angeführtes Patentdokument | Datum der Veröffentlichung | Mitglied(er) der Patentfamilie | Datum der Veröffentlichung |
|---|---|---|---|
| WO 2005072188 A2 | 11-08-2005 | AU 2005208714 A1 | 11-08-2005 |
| | | CN 1926282 A | 07-03-2007 |
| | | EP 1716283 A2 | 02-11-2006 |
| | | EP 2360198 A1 | 24-08-2011 |
| | | JP 2007523232 A | 16-08-2007 |
| | | US 2005163969 A1 | 28-07-2005 |
| | | US 2006105145 A1 | 18-05-2006 |
| | | US 2006115625 A1 | 01-06-2006 |
| | | US 2006186571 A1 | 24-08-2006 |
| | | US 2006186572 A1 | 24-08-2006 |
| | | US 2008029925 A1 | 07-02-2008 |
| | | US 2010264559 A1 | 21-10-2010 |
| | | US 2010292397 A1 | 18-11-2010 |
| | | US 2012161351 A1 | 28-06-2012 |
| | | US 2013075945 A1 | 28-03-2013 |
| | | WO 2005072188 A2 | 11-08-2005 |
| WO 2007112105 A2 | 04-10-2007 | AU 2007230923 A1 | 04-10-2007 |
| | | BR PI0708829 A2 | 13-03-2012 |
| | | CA 2646735 A1 | 04-10-2007 |
| | | US 2007222105 A1 | 27-09-2007 |
| | | US 2007222106 A1 | 27-09-2007 |
| | | US 2007225391 A1 | 27-09-2007 |
| | | US 2007225419 A1 | 27-09-2007 |
| | | US 2008132611 A1 | 05-06-2008 |
| | | US 2010230852 A1 | 16-09-2010 |
| | | US 2010296361 A1 | 25-11-2010 |
| | | US 2012136084 A1 | 31-05-2012 |
| | | US 2013023596 A1 | 24-01-2013 |
| | | US 2013184365 A1 | 18-07-2013 |
| | | US 2014155504 A1 | 05-06-2014 |
| | | US 2014163128 A1 | 12-06-2014 |
| | | WO 2007112104 A2 | 04-10-2007 |
| | | WO 2007112105 A2 | 04-10-2007 |
| US 2012029145 A1 | 02-02-2012 | KEINE | |
| US 2005234213 A1 | 20-10-2005 | US 2005234213 A1 | 20-10-2005 |
| | | US 2007093634 A1 | 26-04-2007 |
| WO 2007044017 A1 | 19-04-2007 | KEINE | |
| WO 0190243 A1 | 29-11-2001 | AU 6716801 A | 03-12-2001 |
| | | CA 2309508 A1 | 26-11-2001 |
| | | US 2002028880 A1 | 07-03-2002 |
| | | WO 0190243 A1 | 29-11-2001 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 20 20 8257

09-04-2021

| Im Recherchenbericht angeführtes Patentdokument | Datum der Veröffentlichung | Mitglied(er) der Patentfamilie | Datum der Veröffentlichung |
|---|---|---|---|
| WO 2008128589 A1 | 30-10-2008 | AT 511966 T | 15-06-2011 |
| | | DE 102007019416 A1 | 24-01-2008 |
| | | DK 2114645 T3 | 05-09-2011 |
| | | EP 2114645 A1 | 11-11-2009 |
| | | ES 2367856 T3 | 10-11-2011 |
| | | PL 2114645 T3 | 30-12-2011 |
| | | PT 2114645 E | 31-08-2011 |
| | | SI 2114645 T1 | 28-10-2011 |
| | | WO 2008128589 A1 | 30-10-2008 |
| WO 9620966 A1 | 11-07-1996 | AT 206443 T | 15-10-2001 |
| | | AU 1598995 A | 24-07-1996 |
| | | CA 2209563 A1 | 11-07-1996 |
| | | DE 69523070 T2 | 04-07-2002 |
| | | EP 0801660 A1 | 22-10-1997 |
| | | ES 2164760 T3 | 01-03-2002 |
| | | JP 3226927 B2 | 12-11-2001 |
| | | JP H10502415 A | 03-03-1998 |
| | | US 5424014 A | 13-06-1995 |
| | | WO 9620966 A1 | 11-07-1996 |

EPO FORM P0461

Seite 2 von 2

**IN DER BESCHREIBUNG AUFGEFÜHRTE DOKUMENTE**

**In der Beschreibung aufgeführte Patentdokumente**

- DE 2707026
- DE 10056251
- DE 4111458
- WO 9620966 A